# EUROPEAN PATENT APPLICATION

(11) **EP 4 513 641 A1**
(43) Date of publication of application: **26.02.2025**
(21) Application number: 23866831.3
(22) Date of filing: 10.03.2023
(51) Int. Cl.: H01M 50/176, H01M 50/15, H01M 50/188, H01M 50/184, H01M 50/169

(54) **TOP COVER ASSEMBLY AND BATTERY**

(30) Priority: 20.09.2022 CN 202211145248
(71) Applicant: Eve Power Co., Ltd., Jingmen, Hubei 448000 (CN); HUIZHOU EVE POWER CO., LTD, Huizhou, Guangdong 516039 (CN)
(72) Inventor: ZHENG, Xu, Jingmen, Hubei 448000 (CN); SHU, Kuanjin, Jingmen, Hubei 448000 (CN); HE, Xiaowu, Jingmen, Hubei 448000 (CN); AN, Suli, Jingmen, Hubei 448000 (CN); DENG, Zhen, Jingmen, Hubei 448000 (CN); HE, Wei, Jingmen, Hubei 448000 (CN)
(74) Representative: Berggren Oy
(86) International application number: PCT/CN2023/080779
(87) International publication number: WO 2024/060528

(57) **Abstract**

Provided are a battery, and a top cover assembly including a top cover sheet (1), a pole (2) and a connecting block (3). The top cover sheet (1) includes a mounting hole (10). The pole (2) includes a body (2) and a boss (22) provided on the body (21). The body (21) is insulatively connected to a lower end of the top cover sheet (1). The boss (22) passes through the mounting hole (10) and insulatively connects to the top cover sheet (1). An outer peripheral edge of an upper end of the boss (22) includes a first notch (201). The connecting block (3) is insulatively connected to an upper end of the top cover sheet (1). The connecting block (3) is provided with a connecting hole (30). The upper end of the boss (22) is inserted into the connecting hole (30). An upper end of a wall of the connecting hole (30) is provided with a second notch (202) circumferentially. The first notch (201) and the second notch (202) form a welding recess (20). The battery includes the above top cover assembly.

## Description

This application claims priority to Chinese Patent Application No. 202211145248.8, filed September 20, 2022, the entire content of which is incorporated herein by reference.

### TECHNICAL FIELD

The present application relates to the technical field of batteries, for example, to a top cover assembly and a battery.

### BACKGROUND

The top covers of the power batteries are mainly used in new energy vehicles. In related art, the top cover of the battery is mainly manufactured by an injection molding process and a riveting process. The injection molding process is limited by the site of the injection molding equipment and by the material molding process, resulting in a lower production efficiency of the top cover and the inability to meet the growing battery cell market. Riveting process procedures are relatively numerous, complicated in structure, and cumbersome in production steps, which also results in a lower production efficiency of the top cover and cannot meet the growing battery cell market.

### SUMMARY

The present application provides a top cover assembly and a battery, which may reduce production costs, improve assembly efficiency and use safety.

In a first aspect, an embodiment of the present application provides a top cover assembly including:
a top cover sheet including a mounting hole;
a pole including a body and a boss provided on the body, in which the body is insulatively connected to a lower end of the top cover sheet, the boss is passed through the mounting hole and insulatively connected to the top cover sheet, and an outer peripheral edge of an upper end of the boss is provided with a first notch; and
a connecting block insulatively connected to an upper end of the top cover sheet, in which the connecting block is provided with a connecting hole, the upper end of the boss is inserted into the connecting hole, an upper end of a wall of the connecting hole is provided with a second notch circumferentially, and the first notch and the second notch form a welding recess.

In one embodiment, a width of an opening of the welding recess is greater than a width of a bottom of the welding recess.

In one embodiment, the top cover assembly further includes:
a sealing ring including a first sealing portion sleeved between an outer periphery of the boss and a wall of the mounting hole, and a second sealing portion disposed at a lower end of the first sealing portion and extended outwardly along a radial direction of the first sealing portion, in which the second sealing portion is sealingly abutted between a lower end face of the top cover sheet and an upper end face of the body.

In one embodiment, the top cover assembly further includes:
a lower insulating plate provided at a lower end of the top cover sheet, in which the lower insulating plate includes a through hole, the boss passes through the through hole, the body is abutted against a lower end surface of the lower insulating plate, and the second sealing portion is provided between a wall of the through hole and the boss.

In one embodiment, the lower end of the top cover sheet includes a first mounting slot, and a side of the lower insulating plate which is adjacent to the top cover sheet includes a protrusion, and the protrusion is snapped in the first mounting slot.

In one embodiment, a side of the lower insulating plate which is away from the top cover sheet includes a second mounting slot, the second mounting slot is provided in correspondence with the protrusion, and the body is snapped in the second mounting slot.

In one embodiment, the top cover assembly further includes:
an upper insulating plate, in which the upper end of the top cover sheet includes a third mounting slot, the upper insulating plate is snapped in the third mounting slot, a fixing recess is formed in the upper insulating plate, a limiting hole is formed at a bottom of the fixing recess, the connecting block is snapped in the fixing recess, and the boss penetrates through the limiting hole and is connected with the connecting hole in an insertion manner.

In one embodiment, the bottom of the fixing recess includes a positioning post, a lower end of the connecting block includes a positioning recess, and the positioning post is snapped in the positioning recess.

In one embodiment, the a lower end of the pole is provided with a weight-reducing recess.

In a first aspect, embodiments of the present application provide a battery including the top cover assembly mentioned above.

Beneficial effects of the present application are as follows.

Embodiments of the present application provide a top cover assembly including a top cover sheet, a pole and a connecting block. When the top cover assembly is assembled, the boss of each pole passes through the respective mounting hole. Then, each connecting block is sleeved at the upper end of the respective boss and welded at the respective welding recess formed by the first notch and the second notch, so that the connecting block and the pole are fixed. The assembling operation of the top cover assembly is simple and quick, the connecting block and the pole are easily fixed, and the number of parts used is small, thereby improving the assembling efficiency and reducing the production cost. At the same time, each connecting block of the top cover assembly has the function of fixing and preventing rotation of the respective pole, thereby improving the structural strength and the use safety of the top cover assembly.

### BRIEF DESCRIPTION OF THE DRAWINGS

FIG. 1 is a schematic structural diagram of a top cover assembly according to embodiments of the present application;
FIG. 2 is an exploded view of a top cover assembly at a first viewing angle according to embodiments of the present application;
FIG. 3 is an exploded view of a top cover assembly at a second viewing angle according to embodiments of the present application;
FIG. 4 is a cross-sectional view of a top cover assembly according to embodiments of the present application;
FIG. 5 is an enlarged view at part A in FIG. 4;
FIG. 6 is a schematic structural diagram of a pole according to embodiments of the present application;
FIG. 7 is a schematic structural diagram of a connection block according to embodiments of the present application; and
FIG. 8 is a schematic structural diagram of a sealing ring according to embodiments of the present application.

In the figure:
1. top cover sheet; 2. pole; 21. body; 22. boss; 3. connecting block; 4. sealing ring; 41. first sealing portion; 42. second sealing portion; 5. lower insulating plate; 51. protrusion; 6. upper insulating plate; 61. positioning post;
10. mounting hole; 20. welding recess; 201. first notch; 202. second notch; 30. connecting hole; 40. through hole; 50. first mounting slot; 60. second mounting slot; 70. third mounting slot; 80. fixing recess; 90. limiting hole; 100. positioning recess; and 200. weight-reducing recess.

### DETAILED DESCRIPTION

In the description of the present application, unless otherwise expressly specified and limited, the terms "conjoint", "connect", and "fix" are to be understood in a broad sense, for example, as a fixed connection, as a detachable connection, or as a one-piece connection; also as a mechanical connection or an electrical connection; or may be directly connected or indirectly connected by means of an intermediate medium; or may be internal communication of the two elements or interaction of the two elements. The specific meaning of the above terms in the present application may be understood by one of ordinary skill in the art as the case may be.

For the purposes of this application, unless otherwise expressly specified and limited, that the first feature is "over" or "under" the second feature may include the first feature is in direct contact with the second feature, or may include the first feature is not in direct contact with the second feature, but by means of a separate feature therebetween. Furthermore, that the first feature is "on", "above" and "over" the second feature includes the first feature is directly above and diagonally above the second feature, or simply indicating that the first feature is horizontally higher than the second feature. That the first feature is "below", "under", and "beneath" the second feature includes the first feature is directly below and diagonally below the second feature, or simply indicating that the first feature is horizontally smaller than the second feature.

In the description of this embodiment, the terms "upper", "lower", "right", and other orientation or positional relationships are based on the orientation or positional relationship shown in the accompanying drawings, and are only for convenience of description and simplified operation. It is not intended to indicate or imply that the device or the element referred to must have a specific orientation, be constructed and operated in a specific orientation, and therefore should not be construed as a limitation on the present application. In addition, the terms "first" and "second" are only used for descriptive purposes and have no special meaning.

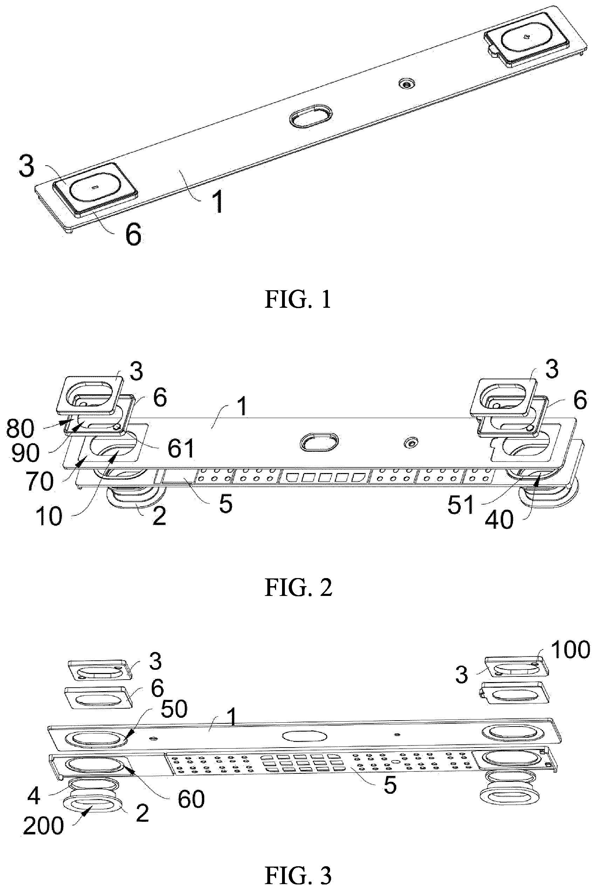

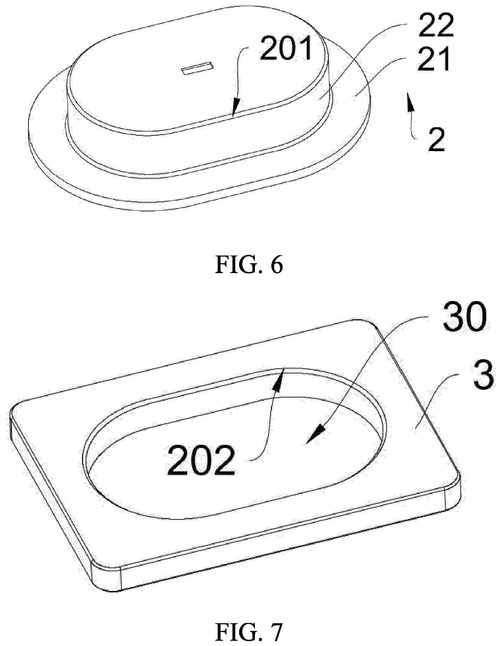

As shown in FIGS. 1 to 8, the present embodiment provides a top cover assembly including a top cover sheet 1, a pole 2, and a connecting block 3. The pole 2 may be a positive pole or a negative pole. In the present embodiment, the pole 2 is used as the negative pole. In other embodiments, when the pole 2 is used as the positive pole, other structures are the same as when the pole 2 is used as the negative pole, and details are not described herein.

In one embodiment, as shown in FIGS. 2 to 7, the top cover sheet 1 includes mounting holes 10. The pole 2 includes a body 21 and a boss 22 provided on the body 21. The body 21 is insulatively connected to a lower end of the top cover sheet 1. The boss 22 passes through the mounting hole 10 and is insulatively connected to the top cover sheet 1. An outer peripheral edge of an upper end of the boss 22 is provided with a first notch 201. The connecting blocks 3 are insulatively connected to an upper end of the top cover sheet 1. The connecting block 3 is provided with a connecting hole 30. An upper end of the boss 22 is inserted into the connecting hole 30. An end of a wall of the connecting hole 30 is provided with a second notch 202 circumferentially. The first notch 201 and the second notch 202 form a welding recess 20. When the top cover assembly is assembled, the boss 22 of each pole 2 passes through the respective mounting hole 10. Then, each connecting block 3 is sleeved at the upper end of the respective boss 22 and welded at the respective welding recess 20 formed by the first notch 201 and the second notch 202, so that the connecting block 3 and the pole 2 are fixed. In the assembly process, each pole 2 is insulatively connected to the top cover sheet 1, and each connecting block 3 is also insulatively connected to the top cover sheet 1, thereby ensuring use safety of the top cover sheet 1. The assembling operation of the top cover assembly is simple and quick, the connecting block 3 and the pole 2 are easily fixed, and the number of parts used is small, thereby improving the assembling efficiency and reducing the production cost. At the same time, each connecting block 3 of the top cover assembly has the function of fixing and preventing rotation of the respective pole 2, thereby improving the structural strength and the use safety of the top cover assembly.

In one embodiment, the poles 2 are made of a composite sheet stamping process, which is low in manufacturing process requirements and is low in costs, and is not susceptible to the thermal stress and cracking, and thus has the higher structural strength and the higher safety. In other embodiments, a lower end of the pole 2 is provided with a weight-reducing recess 200 to reduce the weight of the pole 2, thereby reducing the weight of the top cover assembly.

In one embodiment, the boss 22 is an aluminum block, and the connecting block 3 is also an aluminum block, so as to facilitate welding and fixing. The structure strength and the electrical performance are preferable after the welding and the fixing are performed. In other embodiments, the materials of the boss 22 and the connecting block 3 may be provided according to actual requirements.

In the present embodiment, after the connecting block 3 is sleeved on the boss 22, a jig is used to apply a pressing force to the top cover assembly, so that a plurality of parts are closely adhered to each other. And, the connecting block 3 and the pole 2 are connected and fixed by a laser welding process, thereby completing the assembling operation of the top cover assembly. Furthermore, the melted metal after welding fills the welding recesses 20, and a surface of each connecting block 3 is flush with a surface of the respective boss 22.

In one embodiment, a width of an opening of the welding recess 20 is greater than a width of a bottom of the welding recess 20, so that the molten metal after welding is facilitated to flow into the welding recess 20, thereby avoiding the occurrence of the empty welding within the welding recess 20. In one embodiment, the width of the opening of the welding recess 20 is in the range of 0mm-2mm and a depth of the welding recess 20 is in the range of 0mm-1mm.

In one embodiment, the welding recess 20 has a V-shaped structure, a U-shaped structure, a " 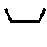 " shaped structure, or a " 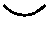 " shaped structure.

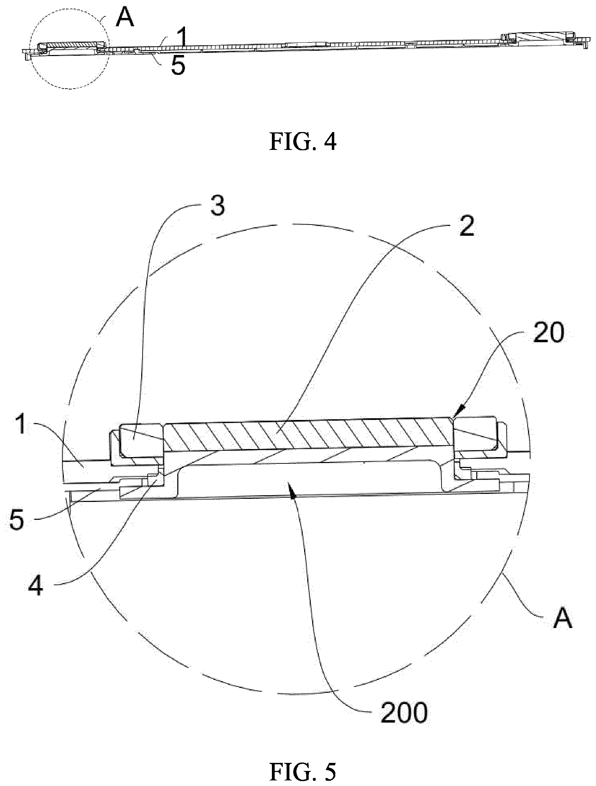

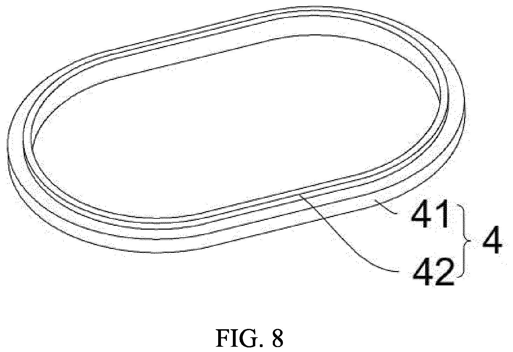

In one embodiment, the pole 2 is insulatively connected to the top cover sheet 1 by a sealing ring 4. In one embodiment, as shown in FIGS. 5 and 8, the sealing ring 4 includes a first sealing portion 41 and a second sealing portion. The first sealing portion is disposed between an outer periphery of the boss 22 and the wall of the mounting hole 10. The second sealing portion 42 is disposed at a lower end of the first sealing portion 41 and extending outwardly along a radial direction of the first sealing portion 41. The second sealing portion 42 sealingly abuts between a lower end face of the top cover sheet 1 and an upper end face of the body 21. The sealing ring 4 enables the boss 22 to be sealingly connected to the mounting hole 10, so that the gas is prevented from being exhausted from the mounting hole 10. The sealing ring 4 functions as an insulation, thereby ensuring the safety of the top cover sheet 1. The sealing ring 4 composed of the first sealing portion 41 and the second sealing portion 42 may effectively prevent the body 21 from being in contact with the top cover sheet 1, and may prevent the sealing ring 4 from slipping from the mounting hole 10, so that the using reliability is higher.

In one embodiment, the sealing ring is made of an acid-alkali-resistant and high-temperature-resistant elastomeric material, which has a longer service life and a better leak tightness.

In the present embodiment, as shown in FIGS. 2 to 5, a lower insulating plate 5 is further provided between the body 21 and the top cover sheet 1. The lower insulating plate 5 may separate the top cover sheet 1 from the body 21, so that the lower insulating plate 5 plays an insulating role and also protects the inside structure of the battery, thereby preventing the inside structure of the battery from being in contact with the top cover sheet 1, and thus effectively improving the use safety of the top cover assembly. Among them, the lower insulating plate 5 is made of a plastic material, and is low in cost and good in insulating performance. In one embodiment, the lower insulating plate 5 is provided at the lower end of the top cover sheet 1. The lower insulating plate 5 is provided with through holes 40. The boss 22 passes through the through hole 40. The body 21 abuts against the lower end surface of the lower insulating plate 5. The second sealing portion 42 is positioned between the wall of the through hole 40 and the boss 22. At the time of assembly, the lower insulating plate 5 and the top cover sheet 1 are stacked, and then the poles 2, which are sleeved with the sealing rings 4, are inserted into the connecting blocks 3 after passing through the through holes 40 and the mounting holes 10 in sequence. The assembly process is simple and rapid, and the production efficiency is improved.

In one embodiment, as shown in FIG. 3, the lower end of the top cover sheet 1 is provided with first mounting slots 50. A side of the lower insulating plate 5 which is adjacent to the top cover sheet 1 is provided with protrusions 51. The protrusion 51 is snapped in the first mounting slot 50. When the lower insulating plate 5 and the top cover sheet 1 are stacked, the protrusions 51 may be aligned with the first mounting slots 50, thereby improving the production efficiency. Moreover, the first mounting slots 50 provide a limiting function for the lower insulating plate 5 to avoid positional deviation between the lower insulating plate 5 and the top cover sheet 1, thereby improving the assembly efficiency of the top cover assembly.

In one embodiment, as shown in FIGS. 2 and 3, second mounting slots 60 are formed on a side of the lower insulating plate 5 which is remote from the top cover sheet 1. The second mounting slot 60 is provided in correspondence with the protrusion 51. The body 21 is snapped in the second mounting slot 60. The second mounting slot 60 provides a limiting function for the pole 2, which facilitates alignment and assembly, and thus improves the structural stability of the top cover assembly. At the same time, the arrangement of the second mounting slot 60 serves to dodge the space at the lower end of the top cover sheet 1, that is, a height of the inside of the battery may be enlarged, thereby increasing the energy density of the battery.

In one embodiment, as shown in FIG. 2, the connecting block 3 is insulatively connected to the top cover sheet 1 through the upper insulating plate 6. The lower insulating plate 5 is made of a plastic material, which is low in cost and good in insulation performance. In one embodiment, an upper end of the top cover sheet 1 is provided with third mounting slots 70. The upper insulating plate 6 is snapped in the third mounting slot 70. The upper insulating plate 6 is provided with a fixing recess 80. A bottom of the fixing recess 80 is provided with a limiting hole 90. The connecting block 3 is snapped in the fixing recess 80. The boss 22 passes through the limiting hole 90 and is inserted into the connecting hole 30. When the top cover assembly is assembled, it is only necessary to place the upper insulating plates 6 in the third mounting slots 70 to limit the position of the upper insulating plates 6, so as to prevent the position offset of the upper insulating plates 6 from affecting subsequent fixing. The connecting blocks 3 are then placed in the fixing recesses 80, and the upper insulating plates 6 serve as insulating members to prevent the connecting blocks 3 from being in contact with the top cover sheet 1, and also serve as limiting fixing members for the connecting blocks 3.

In one embodiment, the third mounting slot 70 is square and has a good limiting effect on the upper insulating plate 6, so that rotation of the upper insulating plate 6 is prevented and the processing is facilitated. The fixing recess 80 is square in shape, so that the fixing recess 80 is easy to be machined. At the same time, the fixing recess 80 has a good limiting effect on the connecting block 3, thereby avoiding the rotation of the connecting block 3, improving the torsional strength of the connecting block 3 and the pole 2, and thus improving the use safety of the top cover assembly. In other embodiments, the shapes of both the third mounting slot 70 and the fixing recess 80 may be provided according to actual requirements.

In one embodiment, the connecting hole 30 is adapted to the outer circumferential shape of the boss 22, and the connecting hole 30 is oval in shape, so that relative rotation of the boss 22 and the connecting hole 30 after insertion may be prevented, thereby improving the connection stability and the torsional strength of both the pole 2 and the connecting block 3. In other embodiments, the connecting hole 30 may also be of other shapes, such as square, diamond, and the like, as desired.

In one embodiment, a bottom of the fixing recess 80 is provided with positioning posts 61. The lower end of the connecting block 3 is provided with a positioning recesses 100, and the positioning posts 61 is snapped in the positioning recesses 100. By snap-engaging the positioning posts 61 with the positioning recesses 100, the torsional strength of the poles 2 and the connecting blocks 3 may be further improved, thereby improving the structural strength and the stability of the top cover assembly. Illustratively, the bottom of the fixing recess 80 is provided with two positioning posts 61 located on the diagonal of the fixing recess 80, so that the connecting block 3 is positioned and placed in the fixing recess 80, and thus the connecting block 3 is evenly stressed.

The present embodiment also provides a battery including the above-described top cover assembly. By using the above-described top cover assembly, the battery has low production cost, high production efficiency, and high safety in use.

## Claims

1. A top cover assembly comprising:
a top cover sheet (1) comprising a mounting hole (10);
a pole (2) comprising a body (21) and a boss (22) provided on the body (21), wherein the body (21) is insulatively connected to a lower end of the top cover sheet (1), the boss (22) is passed through the mounting hole (10) and insulatively connected to the top cover sheet (1), and an outer peripheral edge of an upper end of the boss (22) is provided with a first notch (201); and
a connecting block (3) insulatively connected to an upper end of the top cover sheet (1), wherein the connecting block (3) is provided with a connecting hole (30), the upper end of the boss (22) is inserted into the connecting hole (30), an upper end of a wall of the connecting hole (30) is provided with a second notch (202) circumferentially, and the first notch (201) and the second notch (202) form a welding recess (20).

2. The top cover assembly of claim 1, wherein a width of an opening of the welding recess (20) is greater than a width of a bottom of the welding recess (20).

3. The top cover assembly of claim 1, further comprising:
a sealing ring (4) comprising a first sealing portion (41) sleeved between an outer periphery of the boss (22) and a wall of the mounting hole (10), and a second sealing portion (42) disposed at a lower end of the first sealing portion (41) and extended outwardly along a radial direction of the first sealing portion (41), wherein the second sealing portion (42) is sealingly abutted between a lower end face of the top cover sheet (1) and an upper end face of the body (21).

4. The top cover assembly of claim 3, further comprising:
a lower insulating plate (5) provided at a lower end of the top cover sheet (1), wherein the lower insulating plate (5) comprises a through hole (40), the boss (22) passes through the through hole (40), the body (21) is abutted against a lower end surface of the lower insulating plate (5), and the second sealing portion (42) is provided between a wall of the through hole (40) and the boss (22).

5. The top cover assembly of claim 4, wherein the lower end of the top cover sheet (1) comprises a first mounting slot (50), and a side of the lower insulating plate (5) which is adjacent to the top cover sheet (1) comprises a protrusion (51), and the protrusion (51) is snapped in the first mounting slot (50).

6. The top cover assembly of claim 5, wherein a side of the lower insulating plate (5) which is away from the top cover sheet (1) comprises a second mounting slot (60), the second mounting slot (60) is provided in correspondence with the protrusion (51), and the body (21) is snapped in the second mounting slot (60).

7. The top cover assembly of any one of claims 1-6, further comprising:
an upper insulating plate (6), wherein the upper end of the top cover sheet (1) comprises a third mounting slot (70), the upper insulating plate (6) is snapped in the third mounting slot (70), a fixing recess (80) is formed in the upper insulating plate (6), a limiting hole (90) is formed at a bottom of the fixing recess (80), the connecting block (3) is snapped in the fixing recess (80), and the boss (22) penetrates through the limiting hole (90) and is connected with the connecting hole (30) in an insertion manner.

8. The top cover assembly of claim 7, wherein the bottom of the fixing recess (80) comprises a positioning post (61), a lower end of the connecting block (3) comprises a positioning recess (100), and the positioning post (61) is snapped in the positioning recess (100).

9. The top cover assembly of any one of claims 1 to 6, wherein a lower end of the pole (2) is provided with a weight-reducing recess (200).

10. A battery comprising the top cover assembly of any one of claims 1 to 9.
